# EUROPÄISCHE PATENTANMELDUNG

(11) **EP 2 944 237 A1**
(43) Veröffentlichungstag der Anmeldung: **18.11.2015**
(21) Anmeldenummer: 14405045.7
(22) Anmeldetag: 14.05.2014
(51) Int. Cl.: A47J 31/44

(54) **Auslaufeinrichtung für eine Milchschäumvorrichtung**

(71) Anmelder: JURA ELEKTROAPPARATE AG, 4626 Niederbuchsiten (CH)
(72) Erfinder: Buttiker, Philipp, 4625 Oberbuchsiten (CH); Ullmann, Erich, 4622 Egerkingen (CH)
(74) Vertreter: EGLI-EUROPEAN PATENT ATTORNEYS

(57) **Zusammenfassung**

Es wird eine Auslaufeinrichtung für eine Milchschäumvorrichtung mit einem ersten Teil (10) und einem davon abnehmbar ausgebildeten zweiten Teil (50) angegeben. Mit dem Ziel, die Dichtungseigenschaften zwischen dem ersten Teil (10) und dem abnehmbar ausgebildeten zweiten Teil (50) zu verbessern, sieht die erfindungsgemässe Auslaufeinrichtung (100) vor, dass das erste Teil (10) zumindest Bereichsweise als Emulsionskammer (15) zum Bilden von emulgierten Fluid ausgebildet ist, dass das zweite Teil (50) einen Ausgabebereich (55) zum Ausgeben des in der Emulsionskammer (15) gebildeten emulgierten Fluides aufweist, dass das erste Teil (10) zumindest in einem ersten Bereich (11) aus einem ersten Werkstoff gebildet ist, dass das zweite Teil (50) zumindest in einem ersten Bereich (51) aus einem zweiten Werkstoff gebildet ist, und dass der erste Bereich (11) des ersten Teils (10) und der erste Bereich (51) des zweiten Teils (50) jeweils zueinander komplementäre Verbindungsbereiche sind.

## Beschreibung

Die vorliegende Erfindung betrifft eine Auslaufeinrichtung für eine Milchschäumvorrichtung mit einem ersten Teil und einem davon abnehmbar ausgebildeten zweiten Teil.

Geräte für die Zubereitung von Heissgetränken, insbesondere Kaffee-Zubereitungsautomaten weisen oft eine automatische oder halbautomatisch betreibbare Vorrichtung zum Zubereiten von Milchschaum auf. Insbesondere zur Zubereitung von Heissgetränken wie beispielsweise Cappuccino oder Latte Macchiato kann mittels einer derartigen Milchschäumvorrichtung der zusätzlich benötigte Milchschaum erzeugt und ausgegeben werden.

Es ist hierbei üblich, dass eine derartige Milchschäumvorrichtung Frischmilch und gegebenenfalls Luft durch Ausnutzung des Venturi-Effekts ansaugt, emulgiert und aufschäumt, wobei in einem Bereich der Milchschäumvorrichtung heisser Dampf eingeleitet wird, sodass dieser Dampf an einem Milcheinlasskanal vorbeiströmt und dabei einen Unterdruck erzeugt, wobei infolge des Unterdrucks Milch durch einen Milcheinlasskanal aus einem Vorratsbehälter und gegebenenfalls Luft durch eine Lufteinlassöffnung angesaugt wird.

Derartige Milchschäumvorrichtungen weisen in Strömungsrichtung der aufzuschäumenden Milch gesehen eine Emulsionskammer und einen der Emulsionskammer nachgeordneten Ausgabebereich auf. Insbesondere dieser Ausgabebereich, in welchem oftmals eine Abbremseinrichtung zum Abbremsen des in der Emulsionskammer verwirbelten Fluides vorgesehen ist, weist nach dem Bezug von Milchschaum oftmals Milchrückstände auf, welche unter hygienischen Gesichtspunkten ein Problem darstellen können.

Aus der Technik sind daher austauschbare Düsen für herkömmliche Milchschäumvorrichtungen bekannt, welche auf die Milchschäumvorrichtungen aufsteckbar sind und von einer Bedienperson nach dem Bezug von Milchschaum abgenommen und gereinigt werden können.

Die EP 1 733 663 82 A2 weist eine Düse für eine Milchschäumvorrichtung auf, welche aus zwei spritzgegossenen Kunststoffteilen besteht, welche aus gleichartigen Kunststoffmaterialien gebildet sind und ineinander steckbar bzw. - klebbar ausgebildet sind.

Die EP 1 228 730 A1 offenbart ein Dampfschäumgerät ohne Emulsionskammer mit einem abnehmbar ausgebildeten Schäumkopf. Der abnehmbar ausgebildete Schäumkopf ist aus zwei mittels Schraubverbindung verbundenen Teilen gebildet.

Die EP 1 716 796 B1 offenbar eine Aufschäumvorrichtung für Milch mit einer Emulsionskammer, wobei eine den Schaumstrom regelnde Einrichtung zu Reinigungszwecken von der Aufschäumvorrichtung abnehmbar ausgebildet ist. Das abnehmbare den Schaumstrom regelnde Teil ist im Giessverfahren aus einem Kunststoffmaterial oder einem Elastomere gebildet.

Die bekannten Lösungen weisen den Nachteil auf, dass durch die Abnehmbarkeit der aus Hygienegründen regelmässig zu reinigenden Teile eine Dichtigkeit zwischen einem in Ausgaberichtung des Fluides stromaufwärts angeordneten Teil und dem stromabwärts angeordneten abnehmbaren Teil oftmals nicht gewährleistet ist. Um eine Dichtigkeit zu erzielen, sind oftmals materialaufwendige, kostenträchtige und schwierig handhabbare zusätzliche Dichteinrichtungen erforderlich.

Der vorliegenden Erfindung liegt daher die Aufgabe zugrunde, eine Auslaufeinrichtung für eine Milchschäumvorrichtung anzugeben, bei welcher auf einfache und kostensparende Weise die Dichtigkeitseigenschaften verbessert sind.

Die Aufgabe wird gelöst durch eine Auslaufeinrichtung für eine Milchschäumvorrichtung mit den Merkmalen des unabhängigen Patentanspruches 1.

Insbesondere wird die Aufgabe gelöst durch eine Auslaufeinrichtung für eine Milchschäumvorrichtung, welche ein erstes Teil aufweist, das zumindest bereichsweise als Emulsionskammer zum Bilden von emulgierten Fluid ausgebildet ist, und welche ein zweites Teil aufweist, das von dem ersten Teil abnehmbar ausgebildet ist und einen Ausgabebereich zum Ausgeben des in der Emulsionskammer gebildeten emulgierten Fluides aufweist, wobei das erste Teil zumindest in einem ersten Bereich aus einem ersten Werkstoff gebildet ist, und wobei das zweite Teil zumindest in einem ersten Bereich aus einem zweiten Werkstoff gebildet ist, wobei der erste Bereich des ersten Teils und der erste Bereich des zweiten Teils jeweils zueinander komplementäre Verbindungsbereiche sind.

Hierbei ist in dem ersten Teil die Emulsionskammer zum Bilden des emulgierten Fluides (z.B. eines Milch-Luft-Dampf-Gemisch) vorgesehen, welcher auch nach einem Bezug von aufgeschäumter Milch relativ arm an die hygienischen Verhältnisse beeinträchtigenden Milchrückständen ist. Diese bilden sich vielmehr in dem zweiten Teil, in welchem der Ausgabebereich zum Ausgeben des emulgierten Fluides, in der Regel also des emulgierten und aufgeschäumten Milchschaums vorgesehen ist. Durch die abnehmbare Ausgestaltung des zweiten Teils ist dieses sehr einfach zu reinigen. Dadurch, dass die zueinander komplementär ausgebildeten Verbindungsbereiche des ersten Teils einerseits und des zweiten Teils andererseits aus unterschiedlichen Werkstoffen gebildet ist, ergeben sich bereits inhärent vorteilhafte Dichtungseigenschaften. Insbesondere bei einer Härtendifferenz zwischen den verwendeten Werkstoffen, beispielsweise bei einem Verwenden von Kunststoffen unterschiedlicher Härten für den ersten Werkstoff bzw. den zweiten Werkstoff, werden auf diese Weise vorteilhafte Dichtungseigenschaften zwischen dem ersten Teil und dem zweiten Teil im zusammengesetzten Zustand erhalten.

Vorteilhafte Weiterbildungen der erfindungsgemässen Lösung sind in den abhängigen Patentansprüchen angegeben.

So ist es beispielsweise vorgesehen, dass der erste Werkstoff härter als der zweite Werkstoff ist. Insbesondere ist hierbei vorgesehen, dass der erste Werkstoff ein Hartkunststoff ist und der zweite Werkstoff ein Weichkunstoff ist.

Durch das Vorsehen des härteren der verwendeten Werkstoffe als ersten Werkstoff, d. h. an dem Verbindungsbereich des ersten Teils, ist das erste Teil der Milchschäumvorrichtung, das in der Regel nicht oder nur mit erhöhtem Wartungsauffand auswechselbar ausgestalte ist, sehr beständig, und zwar auch in diesem aus dem harten Werkstoff insbesondere aus dem Hartkunstoff gebildeten Verbindungsbereich des ersten Teils. Indem nun der Verbindungsbereich des zweiten Teils, der komplementär zu dem Verbindungsbereich des ersten Teils ausgebildet ist, aus einem weicheren Werkstoff, insbesondere aus einem Weichkunstoff gebildet ist, ergeben sich sehr vorteilhafte Dichtungseigenschaften zwischen dem ersten Teil und dem abnehmbar ausgebildeten zweiten Teil.

Gemäss einem weiteren Aspekt der Erfindung ist es vorgesehen, dass das erste Teil in einem zweiten Bereich aus einem dritten Werkstoff gebildet ist, wobei der dritte Werkstoff weicher als der erste Werkstoff ist. Insbesondere liegt dieser zweite Bereich des ersten Teils in Durchströmungsrichtung des auszugebenden emulgierten Fluides (z.B. eines Milch-Luft-Dampf-Gemischs) den zueinander komplementär ausgebildeten Verbindungsbereichen nachgeordnet. Insbesondere dann, wenn durch die zwischen dem ersten Teil und dem zweiten Teil hergestellte Verbindung eine Anpress- oder Andrückkraft auf das erste Teil ausgeübt wird, infolge derer dieser zweite Bereich begrenzt verformt wird, kann durch das Ausbilden des zweiten Bereichs aus einem weicheren Werkstoff als der Werkstoff des ersten Bereichs eine vorteilhafte Dichtungseigenschaft erzielt werden.

In diesem Zusammenhang ist es möglich, dass der zweite Bereich des ersten Teils an einem zweiten Bereich des zweiten Teils anliegt, und zwar unter Ausbildung eines umlaufenden Dichtungsbereichs. Insbesondere in Kombination mit der beschriebenen begrenzten Verformung des relativ weichen zweiten Bereichs des ersten Teils ergibt sich hierdurch im Hinblick auf die Verbindung zwischen dem ersten Teil und dem zweiten Teil ein dichter Bereich, welcher auf der gesamten Umfangsfläche des Kontaktbereichs zwischen dem ersten Teil und dem zweiten Teil dicht ist, was die Dichtungseigenschaften weiter verbessert.

Gemäss einem weiteren Aspekt der Erfindung ist es vorgesehen, dass im zusammengesetzten Zustand der umlaufende Dichtungsbereich in Fliessrichtung des emulgierten Fluides (eines Milch-Luft-Dampf-Gemischs) gesehen den Verbindungsbereich nachgeordnet ist. Hierdurch ergibt sich ein besonders einfacher dichter Aufbau.

Gemäss einem weiteren Aspekt der Erfindung ist es vorgesehen, dass die zueinander komplementären Verbindungsbereiche Gewindebereiche sind. In bevorzugter Weise sind die komplementären Gewindebereiche zweigängig ausgebildete Gewindebereiche. Hierdurch ist ein einfaches Auf- bzw. Abschrauben des zweiten Teils an das erste Teil bzw. von dem ersten Teil möglich, bei gleichzeitig guten Dichtungseigenschaften im zusammengebauten Zustand. Hierdurch ist eine besondere einfache Reinigung des zweiten Teils, d. h. eine Befreiung von Milchschaumrückständen möglich.

Gemäss einem weiteren Aspekt der Erfindung ist es vorgesehen, dass das erste Teil und/oder das zweite Teil jeweils im Spritzgussverfahren hergestellt ist bzw. sind. Eine Herstellung im Spritzgussverfahren, welche für Hartkunstoff genauso möglich ist wie für Weichkunstoff, ermöglicht eine besonders kostengünstige Herstellung der erfindungsgemässen Auslaufeinrichtung.

Gemäss einem weiteren Aspekt der Erfindung ist es vorgesehen, dass der erste Bereich des ersten Teils und der zweite Bereich des ersten Teils voneinander trennbar ausgebildet sind. Mit anderen Worten, in diesem Fall ist das erste Teil seinerseits mehrteilig aufgebaut. Insbesondere in Kombination mit einer Herstellung der Teile in Spritzgussverfahren ist es hiermit möglich, den relativ harten ersten Bereich des ersten Teils und den weicheren Teil des ersten Teils jeweils getrennt im Spritzgussverfahren herzustellen, was die Herstellung der Auslaufeinrichtung insgesamt vereinfacht, bei unverändert guten Dichtungseigenschaften.

Gemäss einem weiteren Aspekt der Erfindung ist es vorgesehen, dass das zweite Teil zumindest bereichsweise und vorzugsweise vollständig aus einem transparenten Material ausgebildet ist. Besonders vorzugsweise ist das zweite Teil zumindest bereichsweise und vorzugsweise vollständig aus kristallklarem Kunststoff ausgebildet. Eine transparente oder teiltransparente Ausbildung des zweiten Teils ermöglicht eine einfache visuelle Kontrolle des Verschmutzungsgrades (Verunreinigungsgrades mit Michschaumrückständen) des zweiten Teils. In Kombination mit einer aktiven Beleuchtung, beispielsweise mittels einer geeigneten Lichtquelle (LED) kann eine derartige visuelle Kontrolle weiter vereinfacht werden. Weiterhin ist es denkbar, mit einem an geeigneter Stelle angebrachten Sensor mit zugehöriger Auswertungselektronik den Verschmutzungsgrad des zweiten Teils automatisch festzustellen und ein Signal, beispielsweise eine Reinigungsaufforderung auszugeben oder eine durchzuführende Reinigung automatisiert vom Gerät durchführen zu lassen.

Gemäss einem weiteren Aspekt der Erfindung ist es vorgesehen, dass das erste Teil zumindest bereichsweise als eine Hülse, vorzugsweise als eine zylindrische Hülse und besonders vorzugsweise als eine zylindrische Metallhülse ausgebildet ist. Insbesondere ist das erste Teil in dessen ersten Bereich als zylindrische Metallhülse ausgebildet. Hierdurch werden das optische Erscheinungsbild und die Stabilität des ersten Teils entscheidend verbessert.

Gemäss einem weiteren Aspekt der Erfindung ist es vorgesehen, dass die Emulsionskammern einen ersten Emulsionsbereich und einen damit mittels eines Verbindungskanals verbundenen zweiten Emulsionsbereich aufweist. Der Verbindungskanal weist hierbei - in Strömungsrichtung des Fluides gesehen - einen gegenüber den Emulsionsbereichen deutlich verkleinerten Querschnitt auf. Die Emulsionsbereiche sind innenseitig jeweils von dem ersten Werkstoff zumindest bereichsweise unmittelbar umgrenzt. Dadurch also, dass zumindest Teile der Emulsionskammer bzw. Emulsionskammern des ersten Teils unmittelbar aus dem Werkstoff gebildet sind, aus welchem auch der erste Bereich des ersten Teils, d. h. der Verbindungsbereich des ersten Teils zu dem zweiten Teil gefertigt ist, ist eine besonders einfache Herstellung des ersten Teils möglich, wobei gleichzeitig durch die Wahl eines relativ harten Werkstoffs die Beständigkeit des ersten Teils gewährleistet ist.

Gemäss einem weiteren Aspekt der Erfindung ist es vorgesehen, dass das erste Teil, das zweite Teil oder sowohl das erste Teil als auch das zweite Teil jeweils einen Anschlagbereich zur Begrenzung einer für die Herstellung der Verbindung zwischen dem ersten Teil und dem zweiten Teil notwendigen Bewegung aufweist bzw. aufweisen. Eine derartige Bewegung ist insbesondere dann, wenn eine gewindegängige Verbindung zwischen dem ersten Teil und dem zweiten Teil hergestellt werden soll, eine Drehbewegung, sodass in diesem Fall der Anschlagbereich bzw. die Anschlagbereiche als Drehanschlag ausgebildet ist bzw. sind. Hierdurch, d. h. durch einen derartigen speziellen Einschraub-Begrenzungsanschlag, wird ein zu festes Anziehen durch die Bedienperson beim Anbringen des abnehmbaren zweiten Teils an das erste Teil verhindert. Gleichzeitig wird das Lösen des zweiten Teils vom ersten Teil ohne grossen Kraftaufwand sichergestellt. Der Anschlagsbereich des ersten Teils und/oder der Anschlagsbereich des zweiten Teils kann bzw. können auch einen Rastanschlag für das jeweils andere (erste oder zweite) Teil umfassen, beispielsweise derart, dass das zweite Teil bei einer Bewegung relativ zum ersten Teil an einem am ersten Teil ausgebildet Rastanschlag einrastet, wenn das zweite Teil an den Rastanschlag am ersten Teil anschlägt, oder beispielsweise derart, dass das erste Teil bei einer Bewegung relativ zum zweiten Teil an einem am zweiten Teil ausgebildet Rastanschlag einrastet, wenn das erste Teil an den Rastanschlag am zweiten Teil anschlägt. Derartige Ausbildungen von Rastanschlägen gewährleisten eine relativ stabile Verbindung zwischen dem ersten Teil und dem zweiten Teil, welche durch einen geringen Kraftaufwand wieder gelöst werden kann, um das erste Teil bzw. das zweite Teil von dem am jeweils anderen Teil ausgebildeten Rastanschlag wieder zu entfernen.

In diesem Zusammenhang oder auch unabhängig davon kann es vorgesehen sein, dass das zweite Teil im Querschnitt kreisförmig ausgebildet ist, wobei aussenseitig Handhabungsrillen vorgesehen sind. Dadurch wird die Handhabung, d. h. das Festziehen bzw. das Lösen des zweiten Teils an bzw. von dem ersten Teil weiter vereinfacht. In diesem Zusammenhang ist es vorzugsweise vorgesehen, dass das zweite Teil in Richtung des Ausgabebereichs konisch zuläuft, wodurch sich eine die Handhabung weiter vereinfachende klare Trennung zwischen dem verbindungsseitigen Ende des zweiten Teils und dem ausgabeseitigen Ende des zweiten Teil ergibt.

Gemäss einem weiteren Aspekt der erfindungsgemässen Lösung ist es vorgesehen, dass in Fliessrichtung des emulgierten Fluides gesehen vor dem Ausgabebereich an dem zweiten Teil ein Prallbereich mit einer Prallfläche und/oder mit einem Prallkörper vorgesehen ist. Dieser Prallkörper bzw. diese Prallfläche dient zum Abbremsen und Verwirbeln des emulgierten Fluides. Ein derartiges Abbremsen bzw. Verwirbeln ist zur Bildung eines organoleptisch optimalen Milchschaums vorteilhaft. Gleichzeitig ist dadurch, dass ein derartiger Prallkörper bzw. eine derartige Prallfläche erst in dem zweiten Teil vorgesehen ist, welches von dem ersten Teil abnehmbar ausgebildet ist, sichergestellt, dass erst in diesem zweiten Teil eine nennenswerte Verschmutzung mit Milchschaumrückständen stattfindet, während das erste Teil relativ rückstandsfrei bleibt. Das zweite Teil jedoch ist durch seine abnehmbare Ausgestaltung einfach austauschbar bzw. einfach zu reinigen.

Im Folgenden wird eine bevorzugte Ausführungsform der erfindungsgemässen Auslaufeinrichtung für eine Milchschäumvorrichtung anhand einer Zeichnung mehr erläutert.

Es zeigen:
- Fig. 1:: eine Seitenansicht auf eine Auslaufeinrichtung gemäss einer Ausführungsform der Erfindung im zusammengesetzten Zustand;
- Fig. 2:: die Darstellung der Auslaufeinrichtung gemäss der Ausführungsform aus Fig. 1 im zusammengesetzten Zustand, in einer Schnittansicht;
- Fig. 3:: eine Seitenansicht eines ersten Teils der erfindungsgemässen Auslaufeinrichtung gemäss der Ausführungsform aus Fig. 1;
- Fig. 4:: eine Darstellung des ersten Teils aus Fig. 3, in einer Schnittansicht;
- Fig. 5:: Seitenansicht eines zweiten Teils der Auslaufeinrichtung aus Fig. 1;
- Fig. 6:: eine Darstellung des zweiten Teils aus Fig. 5, in einer Schnittansicht;
- Fig. 7:: eine Draufsicht im Schnitt auf das zweite Teil aus Fig. 5; und
- Fig. 8:: eine Ansicht von unten auf das zweite Teil aus Fig. 5.

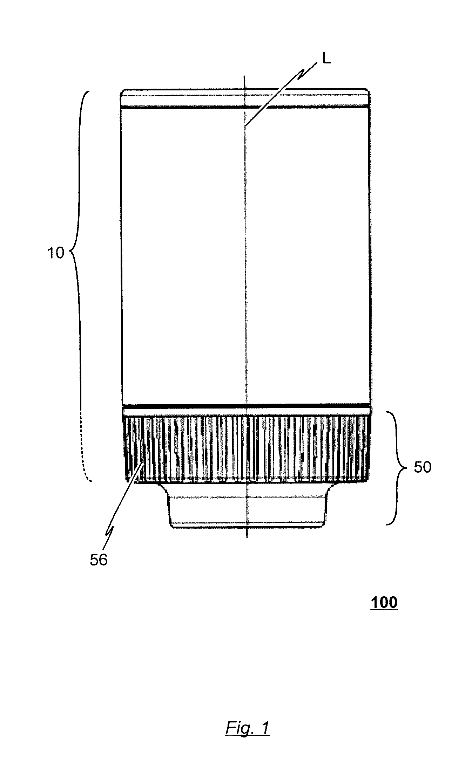

Fig. 1 zeigt eine Seitenansicht einer erfindungsgemässen Auslaufeinrichtung 100 für eine Milchschäumvorrichtung gemäss einer Ausführungsform der Erfindung.

Die Auslaufeinrichtung 100 ist in Fig. 1 in ihrem zusammengesetzten Zustand gezeigt und weist ein erstes Teil auf, welches insgesamt mit dem Bezugszeichen 10 versehen ist, sowie ein zweites Teil, welches insgesamt mit dem Bezugszeichen 50 versehen ist. In der Darstellung gemäss Fig. 1 welcher einer Seitenansicht darstellt, verdeckt ein Bereich des zweiten Teils 50 einen Bereich des ersten Teils 10. Dieser verdeckte Bereich des ersten Teils 10 ist in der Darstellung in Fig. 1 durch eine strichpunktierte Darstellung der entsprechenden Linie des Bezugszeichens 10 angedeutet.

Die Auslaufeinrichtung 100 ist insgesamt symmetrisch um eine Längsachse L aufgebaut, welche das erste Teil 10 und das zweite Teil 50 durchschneidet. Am zweiten Teil 50 sind zur besseren Handhabung Handhabungsrillen 56 vorgesehen, welche ein An- bzw. Abschrauben des zweiten Teils 50 an das erste Teil 10 bzw. von dem erste Teil 10 erleichtern.

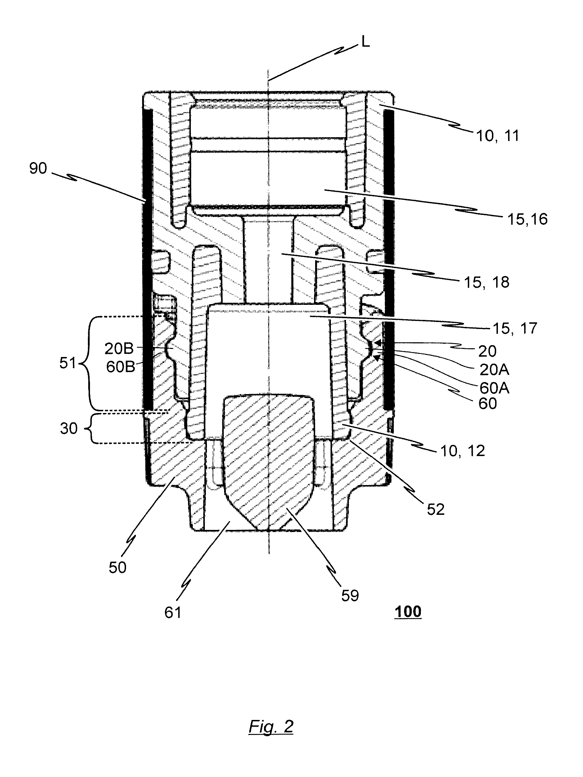

Wie aus der Schnittdarstellung aus Fig. 2 näher ersichtlich, weist das erste Teil 10 einen ersten Bereich 11 auf, welcher aus einem ersten Werkstoff gebildet ist und einen Gewindebereich 20 mit einem zweigängigen (d.h. zwei Gewindegänge 20a und 20b umfassenden) Gewinde aufweist. Das zweite Teil 50 weist seinerseits einen ersten Bereich 51 auf, in welchem einen komplementär zu dem Gewindebereich 20 des ersten Teils 10 ausgebildeten Gewindebereich 60 mit einem zweigängigen (d.h. zwei Gewindegänge 60a und 60b umfassenden) Gewinde ausgebildet ist. Das zweite Teil ist in dem dargestellten Ausführungsbeispiel insgesamt aus einem zweiten Werkstoff gebildet. Der erste Werkstoff ist in dem dargestellten Ausführungsbeispiel ein Hartkunststoff, während der zweite Werkstoff ein Weichkunstoff ist.

Das erste Teil 10 weist weiterhin einen zweiten Bereich 12 auf, welcher aus einem dritten Werkstoff gebildet ist. Der dritte Werkstoff ist wiederum ein Weichkunststoff und in der dargestellten Ausführungsform der gleiche Kunststoff wie der Weichkunststoff des zweiten Teils.

Infolge der festen Verbindung zwischen dem ersten Bereich 11 des ersten Teils 10 und dem ersten Bereich 51 des zweiten Teils 50 wird in einem Bereich, in welchem die Weichkunststoffe des zweiten Bereichs 12 des ersten Teils 10 und eines zweiten Bereichs 52 des zweiten Teils 50 aufeinandertreffen, ein umlaufender Dichtungsbereich 30 ausgebildet, welcher eine dichte Verbindung zwischen dem ersten Teil 10 und dem zweiten Teil 50 sicherstellt.

Gleichzeitig ist dadurch, dass der erste Bereich 11 des ersten Teils 10 aus einem Hartkunststoff gebildet ist, eine sichere und stabile Verbindung zwischen dem ersten Teil 10 und dem zweiten Teil 50 gewährleistet. Gleichzeitig ist das erste Teil 10 durch den Hartkunststoff in seinem ersten Bereich 11 sehr beständig.

Im ersten Teil 10 ist eine Emulsionskammer 15 ausgebildet, welche in dem dargestellten Ausführungsbeispiel aus einem ersten Emulsionsbereich 16, einem zweiten Emulsionsbereich 17 sowie einen die Emulsionsbereiche 16, 17 verbindenden Verbindungskanal 18 gebildet ist. Diese Emulsionsbereiche 16, 17 und der einen unterschiedlichen Querschnitt aufweisende Verbindungskanal 18 sorgen für eine Vermischung, Emulgation und Durchwirbelung des eingebrachten Fluides (Milch-Luft-Dampf-Gemischs). Demgegenüber ist im zweiten Teil 50 ein Prallkörper 59 vorgesehen, welcher bewirkt, dass ein in die Emulsionskammer 15 eingebrachtes Fluid beim Auftreffen auf den Prallkörper 59 abgebremst und in der Emulsionskammer 15 homogenisiert wird, um die Bildung einer möglichst homogene Mischung von Milch, Luft und Dampf in der Emulsionskammer zu erzielen.

Im vorliegenden Beispiel ist der Prallkörper 59 derart geformt, dass er - wie auch der gesamte Teil 50 auf seinen Aussenumfang bezogen - in Richtung einer Auslauföffnung 61 seinerseits konisch zuläuft. Diese konische Form des Prallkörpers 59 ist nicht zwingend notwendig, hat aber zumindest einen Einfluss auf die räumliche Verteilung bzw. die Strömungsrichtung eines durch die Auslauföffnung 59 strömenden Milch-Luft-Dampf-Gemischs (Milchschaum) und kann dazu beitragen, dass das Milch-Luft-Dampf-Gemisch (Milchschaum) in Form eines propagierenden Strahls mit einem relativ grossen Durchmesser und mit einer relativ homogenen und feinen Verteilung von Milchtropfen und Luftblasen über den gesamten Querschnitt des Strahls aus der Auslauföffnung 61 austreten kann.

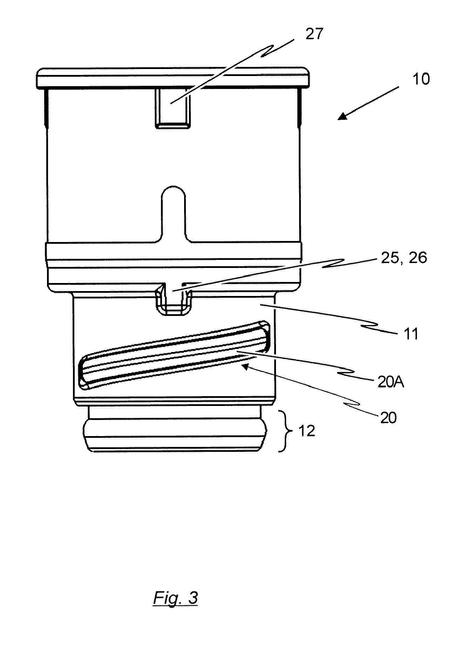

Aus der Darstellung in Fig. 3, welche eine Seitenansicht auf das erste Teil 10 der in den Figuren 1 und 2 dargestellten Ausführungsformen der Erfindung zeigt, ist ersichtlich, dass der Gewindebereich 20 des ersten Teils 10 als zweigängiges Gewinde mit zwei Gewindegängen 20a, 20b ausgebildet ist, wobei in Fig. 2 allerdings nur einer der beiden Gewindegänge sichtbar ist, zumal der andere der beiden Gewindegänge auf einer in Fig. 3 nicht sichtbaren (Rück-) Seite des ersten Teils ausgebildet ist. Oberhalb des Gewindebereichs 20 ist ein Begrenzungsanschlag 25 des ersten Teils 10 vorgesehen, welcher in dem Ausführungsbeispiel als Drehanschlag 26 ausgebildet ist. Dieser stellt sicher, dass das aufgeschraubte zweite Teil, wie es untenstehend noch näher erläutert wird, nicht zu fest auf das erste Teil 10 aufgeschraubt wird. Des Weiteren ist im oberen Bereich des ersten Teils 10 eine Halterippe 27 vorgesehen, welche dem Anbringen einer (in Fig. 2 angedeuteten) metallischen Hülse 90) dient, wobei die Hülse 90 ihrerseits beispielsweise einem optisch ansprechenden Äusseren der Auslaufeinrichtung 100 dienen kann.

Das erste Teil 10 ist aus einem ersten Bereich 11 und einem zweiten Bereich 12 aufgebaut, welche beide im Spritzgussverfahren hergestellt sind und aus Kunststoffen unterschiedlicher Materialhärten gebildet sind. Dabei können der erste Bereich 11 und der zweite Bereich 12 fest miteinander verbunden sein, sodass das erste Teil 10 als einstückiges, aus dem ersten Bereich 11 und dem zweiten Bereich 12 zusammengesetztes Verbundteil ausgebildet ist. Alternativ können der erste Bereich 11 und der zweite Bereich 12 voneinander trennbar sein.

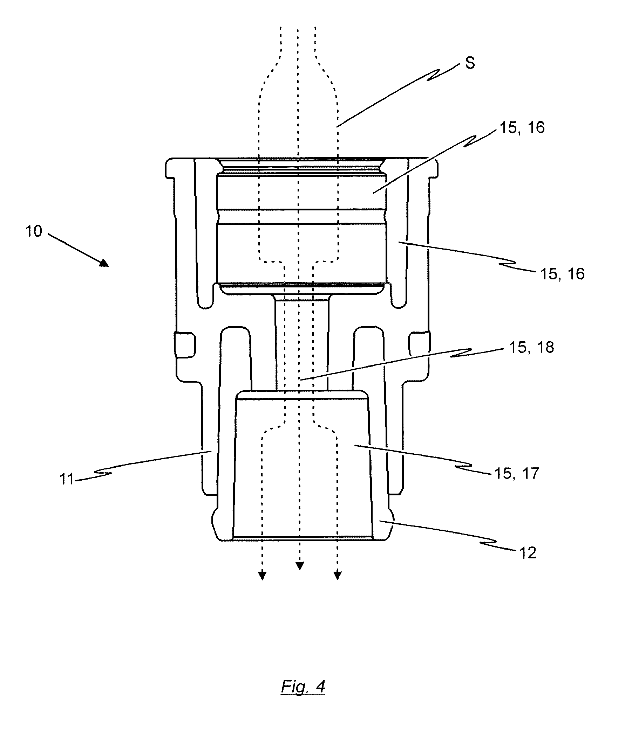

Wie aus der Darstellung in Fig. 4 ersichtlich, umgrenzt der aus einem harten Kunststoffmaterial ausgebildete erste Bereich 11 des ersten Teils 10 die Emulsionsbereiche 16, 17 sowie den Verbindungskanal 18 der Emulsionskammer 15, was deren Beständigkeit gegenüber dem durchströmenden Fluid verbessert, dessen Strömungsverlauf in der Darstellung in Fig. 4 strichpunktiert angedeutet ist und mit dem Bezugszeichen S versehen ist.

Der zweite Bereich 12 des ersten Teils 10, welcher aus einem Weichkunststoff gebildet ist, weitet sich in Strömungsrichtung des Fluides gesehen am stromabwärts gelegenen Ende in einen Wulstbereich auf, welcher der optimalen Ausbildung des umlaufenden Dichtungsbereichs 30 dient, was im Zusammenhang mit Fig. 2 oben stehend näher erläutert wurde.

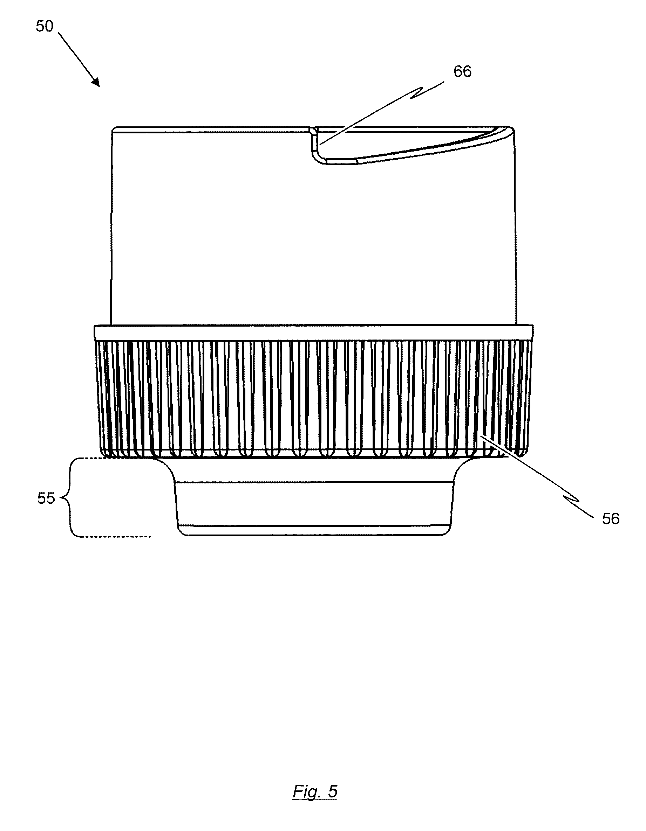

Aus der Seitenansicht in Fig. 5 auf das zweite Teil 50 der erfindungsgemässen Auslaufeinrichtung 100 gemäss dem Ausführungsbeispiel ist der komplementär ausgebildete Begrenzungsanschlag 66 des zweiten Teils 50 näher ersichtlich, welcher an dem Drehanschlag 26 anschlägt, wenn das zweite Teil 50 auf das erste Teil 10 der Auslaufeinrichtung 100 geschraubt wird, um ein zu festes Anziehen durch die Bedienperson zu verhindern und gleichzeitig ein einfaches Lösen des zweiten Teils 50 in der Seitenansicht in einem Ausgabebereich 55 für das aufgeschäumte Fluid konisch zu, um optisch einen Anhaltspunkt für die Ausrichtung beim Aufbringen des zweiten Teils 50 auf das erste Teil 10 zu bieten und die Handhabung zu vereinfachen. Weiterhin weist das zweite Teil 50 zur vereinfachten Handhabung Handhabungsrillen 56 auf, welche ein Abrutschen beim Befestigen bzw. Lösen verhindern.

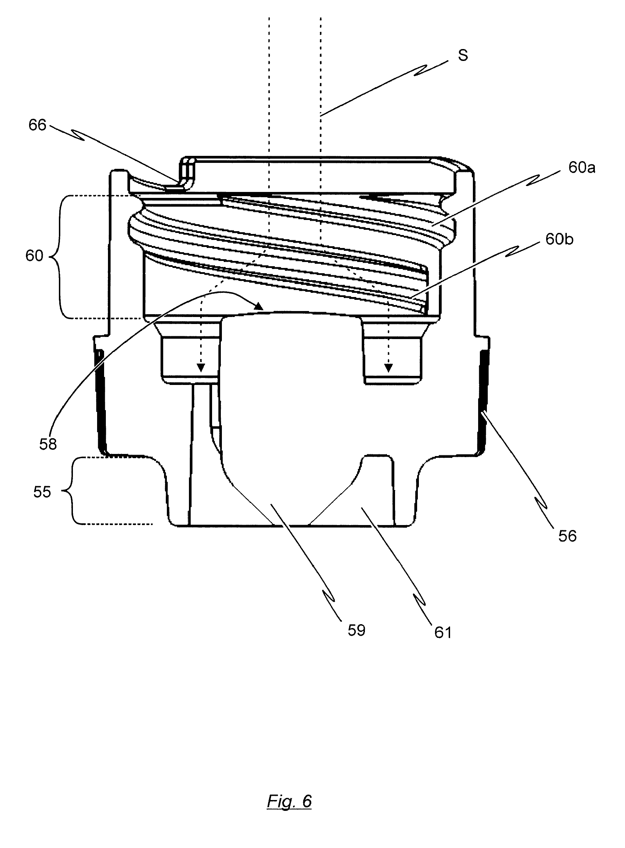

In der in Fig. 6 gezeigten Schnittansicht des zweiten Teils 50 ist der Strömungsverlauf des das zweite Teil 50 durchströmenden Fluides wiederum strichpunktiert angedeutet und mit dem Bezugszeichen S versehen. Für eine einfache Befestigung weist das zweite Teil 50 einen zu dem Gewindebereich 20 des ersten Teils 10 komplementär ausgebildeten Gewindebereich 60 auf, welcher seinerseits einen ersten Gewindegang 60a und einen zweiten Gewindegang 60b aufweist. Durch ein derartig kurzes Gewinde ist eine einfache Handhabung in Folge eines relativ schnell durchführbaren Schraubvorganges gewährleitstet; geleichzeitig ist durch die erfindungsgemäss vorteilhafte Materialwahl zumindest von Bereichen des ersten Teils 10 bzw. des zweiten Teils 50 dennoch eine gute Dichtigkeit zwischen dem ersten Teil 10 und dem zweiten Teil 50 im zusammengebauten Zustand gegeben.

In Bezug auf das durchströmende Fluid in Richtung des Ausgabebereichs 55 gesehen weist das zweite Teil 50 einen Prallkörper 59 auf, welcher stromaufwärts eine Prallfläche 58 aufweist, an welcher das auftreffende Fluid abgebremst und verwirbelt wird. In Richtung einer umlaufenden Auslauföffnung 61 konisch zulaufend sorgt der Prallköper 59 insgesamt dafür, dass das zweite Teil 50, welches als Ausgabeteil der Auslaufeinrichtung 100 für eine Milchschäumvorrichtung dient, eine hinsichtlich seiner Konsistenz optimalen Milchschaum ausgibt.

Da das zweite Teil 50 von dem ersten Teil 10 abnehmbar ist, können an dem Prallkörper 59 zurückbleibende Milchrückstände leicht beseitigt werden bzw. das zweite Teil 50 kann insgesamt bei einem hohen Verschmutzungsgrad unabhängig von dem ersten Teil 10 einfach ausgetauscht werden.

In dem Ausführungsbeispiel ist das zweite Teil 50 insgesamt aus einem kristallklaren relativ weichen Kunststoff gebildet, welcher eine gute optische Kontrolle des Verschmutzungszustandes des zweiten Teils 50 erlaubt.

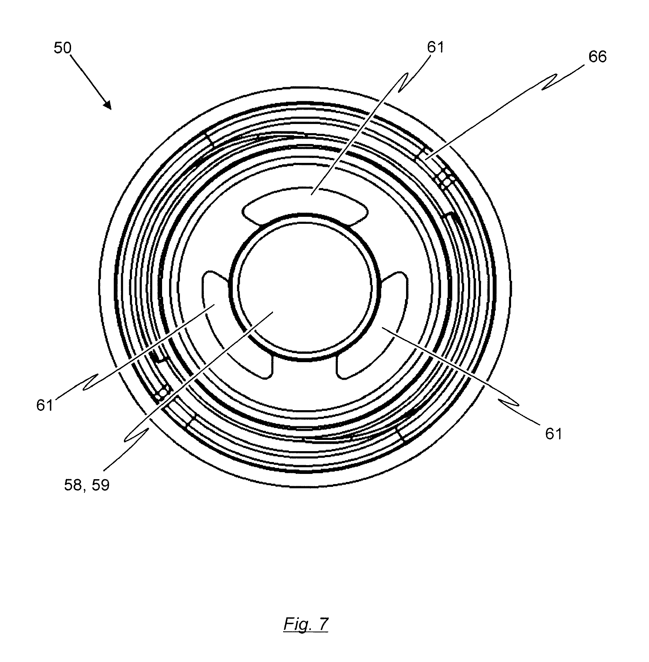

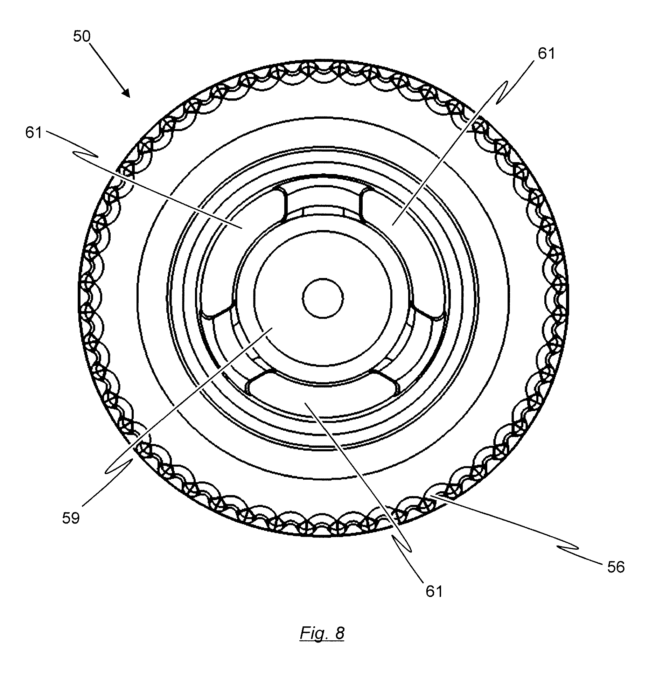

Die Figuren 7 und 8 zeigen zum besseren Verständnis eine Draufsicht (Fig. 7) bzw. eine Ansicht von unten (Fig. 8) des zweiten Teils 50 der Auslaufeinrichtung 100 gemäss der Ausführungsform. In Fig. 7 ist der Prallkörper 59 mit dessen Prallfläche 58 und den umgebenden Auslauföffnungen 61 gut zu erkennen. Fig. 8 zeit die Anordnung des Prallkörpers 59, insbesondere dessen konisches Zulaufen in Strömungsrichtung des Fluides, sowie die den Prallköper 59 umgrenzenden Auslauföffnungen 61.

## Patentansprüche

1. Auslaufeinrichtung (100) für eine Milchschäumvorrichtung, wobei die Auslaufeinrichtung folgendes aufweist:
• ein erstes Teil (10), das zumindest bereichsweise als Emulsionskammer (15) zum Bilden von emulgiertem Fluid ausgebildet ist; und
• ein zweites Teil (50), das von dem ersten Teil (10) abnehmbar ausgebildet ist und einen Ausgabebereich (55) zum Ausgeben des in der Emulsionskammer (15) gebildeten emulgierten Fluids aufweist,
wobei das erste Teil (10) zumindest in einem ersten Bereich (11) aus einem ersten Werkstoff gebildet ist, und wobei das zweite Teil (50) zumindest in einem ersten Bereich (51) aus einem zweiten Werkstoff gebildet ist, wobei der erste Bereich (11) des ersten Teils (10) und der erste Bereich (51) des zweiten Teils (50) jeweils zueinander komplementäre Verbindungsbereiche sind.

2. Auslaufeinrichtung (100) nach Anspruch 1, wobei der erste Werkstoff härter als der zweite Werkstoff ist, und wobei insbesondere der erste Werkstoff ein Hartkunststoff und der zweite Werkstoff ein Weichkunststoff ist.

3. Auslaufeinrichtung (100) nach Anspruch 1 oder 2, wobei das erste Teil (10) in einem zweiten Bereich (12) aus einem dritten Werkstoff gebildet ist, wobei der dritte Werkstoff weicher als der erste Werkstoff ist.

4. Auslaufeinrichtung (100) nach Anspruch 3, wobei der zweite Bereich (12) des ersten Teils an einem zweiten Bereich (52) des zweiten Teils (50) unter Ausbildung eines umlaufenden Dichtungsbereichs (30) anliegt.

5. Auslaufeinrichtung (100) nach Anspruch 4, wobei im zusammengesetzten Zustand der umlaufende Dichtungsbereich (30) in Fliessrichtung des emulgierten Fluids gesehen den Verbindungsbereichen nachgeordnet ist.

6. Auslaufeinrichtung (100) nach einem der vorhergehenden Ansprüche, wobei die zueinander komplementären Verbindungsbereiche Gewindebereiche (20, 60), vorzugsweise zweigängig ausgebildete Gewindebereiche (20, 60) sind.

7. Auslaufeinrichtung (100) nach einem der vorhergehenden Ansprüche, wobei das erste Teil (10) und/oder das zweite Teil (50) jeweils im Spritzgussverfahren hergestellt sind.

8. Auslaufeinrichtung (100) nach einem der vorhergehenden Ansprüche, wobei der erste Bereich (11) und der zweite Bereich (12) fest miteinander verbunden sind, sodass das erste Teil (10) als einstückiges, aus dem ersten Bereich (11) und dem zweiten Bereich (12) zusammengesetztes Verbundteil ausgebildet ist.

9. Auslaufeinrichtung (100) nach einem der Ansprüche 1-7, wobei der erste Bereich (11) des ersten Teils (10) und der zweite Bereich (12) des ersten Teils (10) voneinander trennbar ausgebildet sind.

10. Auslaufeinrichtung (100) nach einem der vorhergehenden Ansprüche, wobei das zweite Teil (50) zumindest bereichsweise und vorzugsweise vollständig aus einem transparenten Material, besonders vorzugsweise aus kristallklarem Kunststoff ausgebildet ist.

11. Auslaufeinrichtung (100) nach einem der vorhergehenden Ansprüche, wobei das erste Teil (10) zumindest bereichsweise als eine Hülse, vorzugsweise als eine zylindrische Hülse (90), besonders vorzugsweise als eine zylindrische Metallhülse und insbesondere in dessen erstem Bereich (11) als zylindrische Metallhülse ausgebildet ist.

12. Auslaufeinrichtung (100) nach einem der vorhergehenden Ansprüche, wobei die Emulsionskammer (15) einen ersten Emulsionsbereich (16) und einen damit mittels eines Verbindungskanals (18) verbundenen zweiten Emulsionsbereich (17) aufweist, wobei die Emulsionsbereiche (16, 17) innenseitig jeweils von dem ersten Werkstoff zumindest bereichsweise unmittelbar umgrenzt sind.

13. Auslaufeinrichtung (100) nach einem der vorhergehenden Ansprüche, wobei das erste Teil (10) und/oder das zweite Teil (50) jeweils einen Anschlagbereich (25, 66) zur Begrenzung einer für die Herstellung der Verbindung zwischen dem ersten Teil (10) und dem zweiten Teil (50) notwendigen Bewegung, insbesondere einen Drehanschlag zur Begrenzung einer für die Herstellung einer gewindegängigen Verbindung zwischen dem ersten Teil (10) und dem zweiten Teil (50) notwendigen Drehbewegung aufweist.

14. Auslaufeinrichtung (100) nach einem der vorhergehenden Ansprüche, wobei das zweite Teil (50) im Querschnitt kreisförmig ausgebildet ist und vorzugsweise in Richtung des Ausgabebereichs (55) konisch zuläuft, wobei aussenseitig Handhabungsrillen (56) vorgesehen sind.

15. Auslaufeinrichtung (100) nach einem der vorhergehenden Ansprüche, wobei in Fliessrichtung des emulgierten Fluids gesehen vor dem Ausgabebereich (55) an dem zweiten Teil (50) ein Prallbereich mit einer Prallfläche (58) und/oder einem Prallkörper (59) zum Abbremsen und Verwirbeln des emulgierten Fluids vorgesehen ist.
